Europäisches Patentamt

European Patent Office

Office européen des brevets

(19)

(11) **EP 0 987 613 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.$^7$: **G05B 19/418**

(21) Anmeldenummer: **99117923.5**

(22) Anmeldetag: **14.09.1999**

(54) **Verfahren zur Steuerung von diskretisierbaren chemischen Prozessen nach einem Produktionsplan**

Method for controlling seperable chemical processes according to a production plan

Procédé de contrôle de processus chimiques séparables selon un plan de production

(84) Benannte Vertragsstaaten:
**AT BE CH CY DE DK ES FI FR GB GR IE IT LI LU MC NL PT SE**

(30) Priorität: **16.09.1998 DE 19842482**

(43) Veröffentlichungstag der Anmeldung:
**22.03.2000 Patentblatt 2000/12**

(73) Patentinhaber: **BASF AKTIENGESELLSCHAFT**
**67056 Ludwigshafen (DE)**

(72) Erfinder:
 • **Full, Joachim**
  **67071 Ludwigshafen (DE)**
 • **Rehmer, Gerd, Dr.**
  **67259 Beindersheim (DE)**
 • **Armbruster, Harald, Dr.**
  **67117 Limburgerhof (DE)**
 • **Nahstoll, Jürgen, Dr.**
  **67304 Eisenberg (DE)**

(74) Vertreter: **Isenbruck, Günter, Dr. et al**
 **Patent- und Rechtsanwälte,**
 **Bardehle-Pagenberg-Dost-Altenburg-Geissler-Isenbruck**
 **Theodor-Heuss-Anlage 12**
 **68165 Mannheim (DE)**

(56) Entgegenhaltungen:
 • XIA Q ET AL: "Routing, scheduling and product mix optimisation by minimax algebra models" FOURTH EUROPEAN SYMPOSIUM ON COMPUTER AIDED PROCESS ENGINEERING. ESCAPE 4, PROCEEDINGS OF FOURTH EUROPEAN SYMPOSIUM ON COMPUTER AIDED PROCESS ENGINEERING (ESCAPE 4), DUBLIN, UK, 28-30 MARCH 1994, Seiten 87-94, XP001025977 1994, Rugby, UK, Inst. Chem. Eng, UK ISBN: 0-85295-321-6

**Beschreibung**

Die Erfindung betrifft ein Verfahren zur Produktionssteuerung von diskretisierbaren chemischen Prozessen, die nach einem Produktionsplan ablaufen. Dabei werden innerhalb des Produktionsplans gleichzeitig mehrere Produkte auf mehreren Teilanlagen hergestellt (Mehrstufen-Mehrprodukt-Anlage).

Als Stand der Technik wird auf den Artikel von Xia et al. "Routing, Scheduling and Product Mix Optimization by Minimax Algebra Models", Rugby, UK, 1994 hingewiesen.

Diskretisierbare chemische Prozesse können sowohl kontinuierliche als auch diskontinuierliche Prozesse sein, da auch ein kontinuierlicher Prozeß in einen Anfangvorgang, den regulärem Betrieb und einen Abschlußvorgang unterteilt werden kann. Gegebenenfalls können in einem kontinuierlichen Prozeß innerhalb des Prozesses Umstellungen der Betriebsparameter vorgenommen werden, die zu einem Betriebspunktwechsel führen. Die Erfindung eignet sich daher auch für in verschiedene Abschnitte unterteilbare (diskretisierbare) kontinuierliche Prozesse.

Es ist bekannt, den Produktionsplan für die Herstellung mehrerer Produkte auf mehreren Teilanlagen mit jeweils einem oder mehreren Apparaten vor Beginn der Herstellung festzulegen und die Teilanlagen gemäß den festgelegten Zeiten zur Herstellung der festgelegten Produkte zu betreiben. Verändern sich die festgelegten Zeiten, entweder weil ein Produktionsschritt schneller vollzogen ist als festgelegt wurde oder weil Störungen auftreten, durch welche sich die Zeiten verlängern, so liegt für den Fall der Verkürzung eines Produktionsschritts eine Stillstand-Zeit einer Teilanlage und für den Fall der Verlängerung innerhalb einer Teilanlage in einer der übrigen Teilanlagen eine Wartezeit vor, wodurch das gemäß dem Produktionsplan eigentlich zu erwartende Ende verschoben wird. In der Regel wird dann eine von dem ursprünglich optimierten Produktionsplan weit abweichende Lösung erreicht, die vom eigentlichen Optimum weit entfernt ist. Die Zeitabweichung kann aber auch zu Produktveränderungen während des Stillstands führen, weiterhin ist der Sicherheitsaspekt bei der Lagerung des Produkts bei unvorhergesehenen Zeitunterbrechungen besonders bei gefährlichen Produkten zu berücksichtigen.

Bei komplexen Prozessen mit mehrstufiger Produktion auf mehreren Apparaten, mehreren Produkten und begrenzten Ressourcen führt das bislang praktizierte Planen und Rechnen mit aus den Zeiten einzelner Verfahrensschritte gebildeten Mittelwerten als Vereinfachung des komplexen Produktionssystems zu großen Abweichungen von der tatsächlich benötigten Produktionsdauer.

Die Aufgabe der Erfindung besteht darin, auch bei gestörtem Ablauf des Produktionsplans einen zufriedenstellenden Prozeßablauf zur Verfügung zu stellen.

Gemäß der Erfindung wird ein auf einen Betriebsparameter zumindest einer der Teilanlagen bezogener Meßwert erfaßt und überwacht, die Überschreitung eines Grenzwerts des Meßwerts löst ein Signal aus, aufgrund des Signals erfolgt eine Neuberechnung des Produktionsplans, und auf den Teilanlagen findet eine Durchführung der Prozesse entsprechend des neuen Produktionsplans statt. Dies kann auch vollautomatisch stattfinden.

Die Signale geben einen momentanen Zustand in den Teilanlagen an und sind zeitlich veränderlich. Diese Signale sind die Folge von Ist-Werten, die an durch die Neuberechnung des Produktionsplans ermittelte Sollwerte heranzuführen sind. Hierzu werden die Signale auch nach der Neuberechnung des Produktionsplans mehrfach überprüft, und bei zu großen Abweichungen gegenüber den Sollwerten kann eine nochmalige Neuberechnung des Produktionsplans in einer weiteren Iteration erfolgen. Als Signale können beispielsweise Betriebsparameter aufgrund einer schwankenden Qualität der Einsatzstoffe auftreten, ebenso veränderte Betriebsparameter oder Einflußgrößen aus gekoppelten Prozessen.

Bei dem Einsatz mehrerer Teilanlagen innerhalb einer Stufe kann die Vorhaltung paralleler Teilanlagen innerhalb einer Stufe auf ein Mindestmaß zurückgeführt werden, wodurch die Auslastung der Gesamtanlage steigt. Wesentlich hierbei ist, daß bei Auftreten eines außerplanmäßigen Verhaltens eines Betriebsparameters nicht, wie bislang üblich, der alte Produktionsplan im wesentlichen beibehalten wird und nur die tatsächlich auftretende Abweichung beseitigt wird, sondern daß aufgrund des außerplanmäßigen Verhaltens ein völlig neuer Produktionsplan mit geänderten Belegungen der Teilanlagen erstellt und automatisch ausgeführt wird.

Dabei kann eine vollautomatische Steuerung der Prozesse nach der Neuberechnung des Produktionsplans erfolgen, die aufgrund der Kopplung an den oder die Betriebsparameter automatisch vorgenommen wurde.

Zur Berechnung des Produktionsplans können fest vorgegebene Zeiten für einzelne Verfahrensschritte aus einem Speicher ausgelesen werden und es kann eine Neuberechnung des Produktionsplans bei Auftreten des Signals mit diesen fest vorgegebenen Zeiten erfolgen. Die Zeiten eines Verfahrensschrittes wurden rechnerisch ermittelt oder in der Praxis festgestellt.

Um Wartezeiten zu verkürzen kann es vorteilhaft sein, die dem Produktionsplan zugrundeliegenden Zeiten, ausgehend von einem anhand von realen, verfahrensspezifischen Abläufen ermittelten Startwert, nach Auftreten des Signals zu verändern, bevor mit diesen geänderten Zeiten eine Neuberechnung des Produktionsplans erfolgt. Hierdurch ist es möglich, Erfahrungswerte oder rechnerisch ermittelte Zeiten den tatsächlichen Gegebenheiten anzupassen und für Neuberechnungen zu berücksichtigen, wo die Annäherung an ein Optimum steigt.

Zur Vermeidung von tatsächlich vorhandenen Konflikten bei der Neuberechnung des Produktionsplans ist es vorteilhaft, vorgegebene Regeln aus einem Speicher auszulesen und auf Vereinbarkeit mit der jeweils vorgeschlagenen Maßnahme zu prüfen, wobei im Falle der Nichtvereinbarkeit eine Neuberechnung des Produktionsplans unter Berücksichtigung dieser Regeln erfolgen kann. Dabei können während der Berechnung des Produktionsplans schrittweise Maßnahmen festgelegt werden und die jeweils vorgeschlagene Maßnahme auf Vereinbarkeit mit den Regeln überprüft werden. Im Fall der Nichtvereinbarkeit einer vorgeschlagenen Maßnahme mit einer Regel erfolgt eine Neuberechnung dieses Schrittes des Produktionsplans unter Berücksichtigung der Regel.

Als Regeln werden insbesondere Erfahrungswerte angesehen, die die freie Verfügbarkeit über Teilanlagen bzw. einzelne Apparate innerhalb von Teilanlagen beschränken. Dies sind beispielsweise die ständige Bereithaltung von Mindestmengen zur Sicherstellung der Liefersicherheit, die Berücksichtigung von Kapazitätsgrenzen einzelner Teilanlagen oder auch die Abarbeitung von Kundenaufträgen unterschiedlicher Priorität. Weitere Beispiele sind die Kapazität bei Zwischenlagerungen, besondere Betriebszeiten, Vorgänger-Nachfolgebeziehungen, Ressourcennutzung bei knappen Teilanlagen, Beschränkungen von Ressourcen wie elektrischer oder thermischer Energie, Prioritäten für bestimmte Vorgänge, beispielsweise aufgrund von Zerfallszeiten von Produkten nach dem first-in-first-out oder dem last-in-first-out oder anderen Prinzipien, sowie bei Abfüllung in Gebinden der verfügbare Lagerplatz für die gefüllten Gebinde.

Diese Regeln können auch durch besondere Signale veränderbar sein, so daß eine dynamische Regelung bewirkt wird.

Vorteilhafterweise sind die Regeln vor der Berechnung des Produktionsplans in Form eines Entscheidungsbaums abgespeichert, so daß nicht die mathematisch optimale Lösung gesucht wird, sondern eine die Erfahrungsgrundsätze berücksichtigende Lösung als ausreichend angesehen wird.

Werden bei Auftreten des Signals die gespeicherten Regeln auf eine Handlungsanweisung hin überprüft, der bei Auftreten des Signals vorhandene Ist-Zustand aufgrund der aufgefundenen Handlungsanweisung in einen korrigierten Ist-Zustand überführt und der Produktionsplan ausgehend von dem neuen Ist-Zustand neu berechnet, so wird das vorhandene Regelwerk außer zur Erstellung des Produktionsplan zusätzlich dazu genutzt, eine erste Reaktion auf das Signal bereitzustellen. Die Regeln werden also dahingehend überprüft, ob sie Handlungsanweisungen als direkte Maßnahme auf das Signal enthalten, so daß eine Steuerung erfolgt.

Mit dem Verfahren lassen sich vorteilhafterweise solche Signale automatisch verwerten, die ein Alarmsignal für einen gestörten Prozeßverlauf darstellen. Dabei ist der Begriff "Störung" nicht nur auf Fehler im Prozeßverlauf beschränkt, sondern auch auf positive Abweichungen, wie beispielsweise die Meldung eines Prozeßendes vor Ablauf der eigentlich dafür vorgesehenen Zeit oder auch zusätzliche Produktionsaufträge bei gekoppelten Prozessen.

Insbesondere dann, wenn innerhalb mindestens einer Stufe mehrere Teilanlagen vorhanden sind, ist es vorteilhaft, daß bei Auftreten des Signals eine Neubestimmung des Produktionswegs innerhalb einer Stufe erfolgt. Hierdurch wird sichergestellt, daß die in der Stufe herzustellenden Produkte auch nach dem Signal unter Berücksichtigung der Vorgabe auf die einzelnen Teilanlagen verteilt sind.

Als Betriebsparameter kommen insbesondere die Temperatur, die Viskosität, der Druck, die Konzentration, der Füllstand oder der Durchfluß in Betracht. Besonders vorteilhaft ist die Verwendung des Verfahrens zur Steuerung von diskontinuierlichen Prozessen und die Möglichkeit der Umschichtung zwischen den Teilanlagen.

In der Zeichnung ist ein Ausführungsbeispiel des erfindungsgemäßen Verfahrens für eine Mehrstufen-Mehrprodukt-Anlage unter verschiedenen Voraussetzungen bzw. Zielvorgaben für drei Produkte in drei Stufen dargestellt.

Es zeigt die

Fig. 1    einen herkömmlich erstellten Produktionsplan nach der Mittelwertmethode, unter Vorgabe einer schnellstmöglichen Produktion von drei Ansätzen eines Produktes, die

Fig. 2    einen Produktionsplan, der aufgrund der Berücksichtigung der Einzelzeiten unter der Vorgabe einer schnellstmöglichen Produktion von drei Ansätzen des Produkts A berechnet wurde, die

Fig. 3    den Produktionsplan für die schnellstmögliche Verfügbarkeit einer Charge der Produkte A, B, C, die

Fig. 4    einen Produktionsplan für eine zeitoptimale Produktionssteuerung, die

Fig. 5    eine herkömmliche Produktionssteuerung ausgehend von einem ersten Produktionsplan gemäß Fig. 3 nach Auftreten einer Störung, die

Fig. 6    einen aufgrund der Störung erfindungsgemäß neuberechneten Produktionsplan, die

Fig. 7    einen über die Zeit aufgetragenen Ablaufplan des erfindungsgemäßen Verfahrens und die

Fig. 8    eine Schaltungsskizze für den der Erfindung zugrundeliegenden Regelkreis.

Das dem Ausführungsbeispiel zugrundeliegende Verfahren zur Herstellung von drei Produkten A, B, C umfaßt drei Stufen 1, 2, 3. In einer Stufe 1, 2, 3 können mehrere Teilanlagen (1.1-1.2, 2.1, 3.1-3.4), also Anlagen gleichen Typs, die mindestens zeitweise selbständig betreibbar sind, vorhanden sein. Darüberhinaus sind auch Stufen 2 mit nur einer Teilanlage 2.1 vorstellbar, wobei die funktionelle Beschaffenheit der Stufe durch ein später erläutertes Regelwerk verändert werden kann. Die Stufe 1 verfügt über doppelte Teilanlagen, die Stufe 2 über eine Teilanlage und die Stufe 3 über vier Teilanlagen. Zur Herstellung der Produkte A, B, C sind in den einzelnen Stufen vorgegebene, aus betrieblicher Erfahrung geschätzte und/oder rechnerisch ermittelte Verweilzeiten entsprechend Tabelle 1 angesetzt.

| Teilanlage | Produkt | | |
|---|---|---|---|
| | A | B | C |
| Stufe 1 | 3h | 2h | 1h |
| Stufe 2 | 1h | 1h | 1h |
| Stufe 3 | 4h | 4h | 4h |

Für das Ausführungsbeispiel werden weiterhin als Regel bei Produktwechsel eine Reinigungszeit einer Teilanlage von 1 Stunde und eine herzustellende Menge von jeweils drei Ansätzen (Chargen) angenommen.

Weiterhin ist ein Entscheidungsbaum festgelegt, der bestimmte Regeln (Erfahrungswerte) festschreibt, beispielsweise Wartungszeiten nach einer bestimmten Zahl von Betriebsstunden oder die Verfügbarkeit einer Teilanlage in Abhängigkeit der Tageszeit bzw. der noch zu erwartenden Zeit bis zum täglichen Arbeitszeitende.

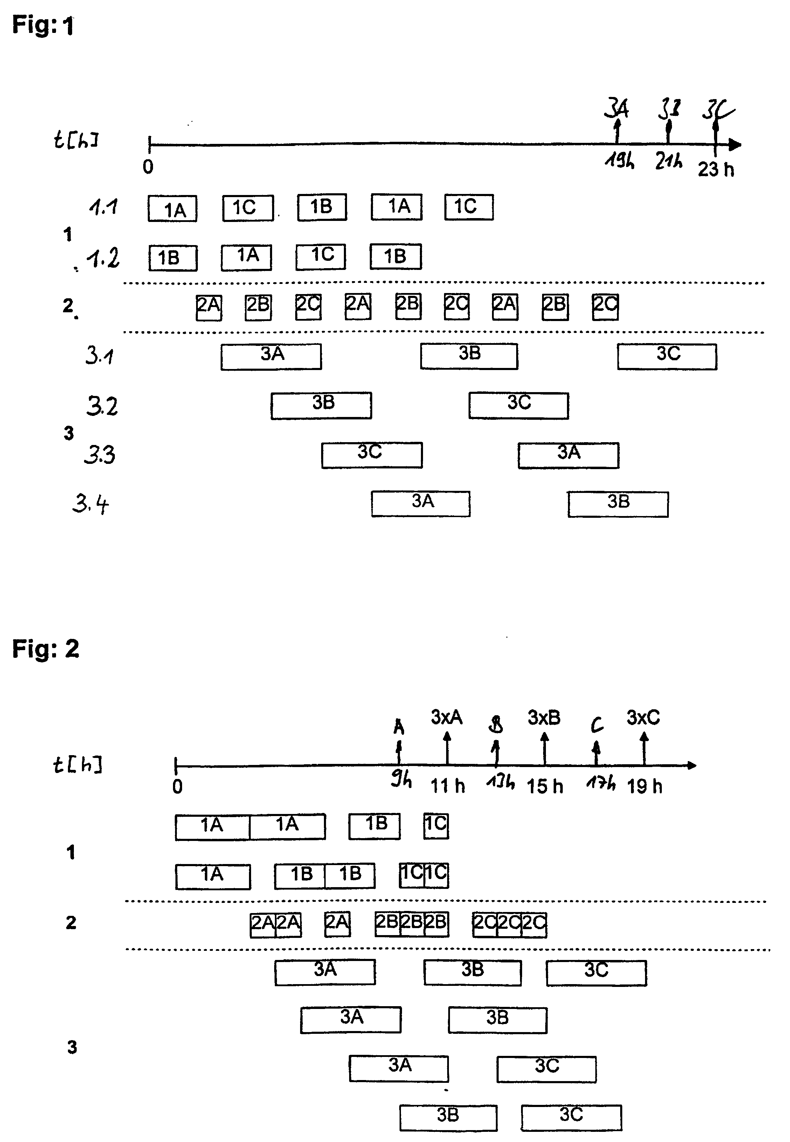

In Fig. 1 ist ein in herkömmlicher Weise nach der Mittelwertmethode erstellter Produktionsplan gezeigt. Sämtliche Reaktionszeiten einer Stufe werden hier addiert und durch die Anzahl der Produkte geteilt. Im vorliegenden Beispiel bedeutet das für die Stufe 1 eine mittlere Verweilzeit, die sich wie folgt berechnet:

$$3\,h + 2\,h + 1\,h = 6\,h \div 3\ \text{Produkte} = 2\,h$$

pro Produkt. Die mittlere Verweilzeit in der Stufe 1 beträgt demnach 2 Stunden. In Stufe 2 beträgt die mittlere Verweilzeit 1 Stunde, in Stufe 3 4 Stunden. Die erste Charge des Produkts A ist nach dieser Methode nach 19 Stunden verfügbar, die gesamte Produktionsdauer beträgt 23 Stunden. Es ist zu erkennen, daß jeweils nacheinander die Produkte A, B und C die einzelnen Stufen durchlaufen.

In Fig. 2 ist ebenfalls ein Produktionsplan mit der Vorgabe einer schnellstmöglichen Produktion der drei Ansätze des Produktes A aufgestellt. Diese Vorgabe kommt z.B. von einem Lagerstandsmelder, der den Vorrat eines instabilen Produkts erfaßt. Die erste Charge des Produkts A ist schnellstmöglich nach 8 Stunden erstmalig verfügbar, alle 3 Chargen des Produkts A sind nach 11 Stunden verfügbar, die gesamte Produktionsdauer beträgt 19 Stunden. Das Produkt B ist nach 13 Stunden, das Produkt C nach 17 Stunden erstmalig verfügbar.

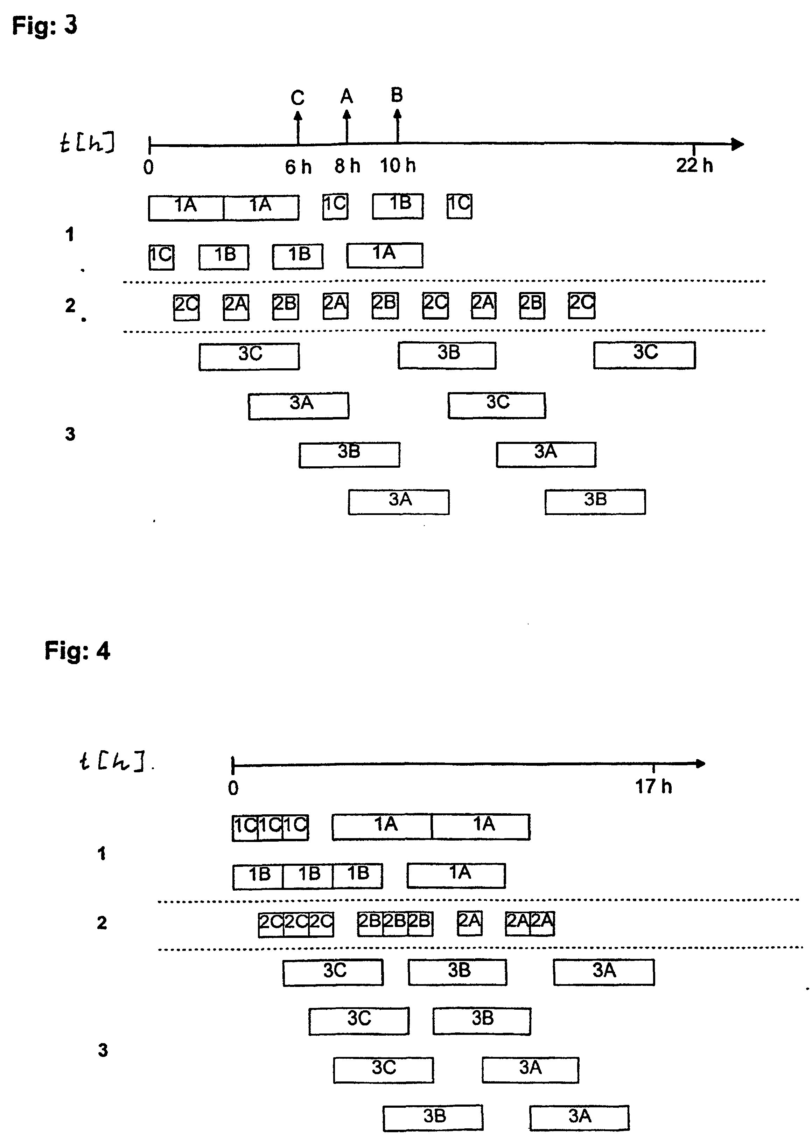

In Fig. 3 ist ein Produktionsplan mit der Vorgabe einer möglichst frühen Verfügbarkeit der Produkte A, B, C gezeigt, wobei innerhalb von 10 Stunden von jedem der Produkte A, B, C mindestens ein Ansatz vorhanden ist. Die gesamte Produktionszeit steigt auf 22 Stunden. Dieser Vorgang wird durch einen Lagerbestandsmelder eines diese drei Produkte A, B, C benötigenden Syntheseprodukts ausgelöst.

Der in Fig. 4 dargestellte Produktionsplan ist zeitoptimiert, d.h. die Reinigungszeiten sind minimal. Der gesamte Produktionsprozeß ist nach 17 Stunden abgeschlossen, erst nach 14 Stunden ist mindestens ein Ansatz jedes der Produkte A, B, C vorhanden. Diese Betriebsweise sichert eine größtmögliche Auslastung der Teilanlagen und stellt einen bevorzugten "stabilen" Zustand dar, solange keine dem entgegenstehenden Signale erfaßt werden, die zu einer Neuberechnung des Produktionsplans anhand der Regeln führen.

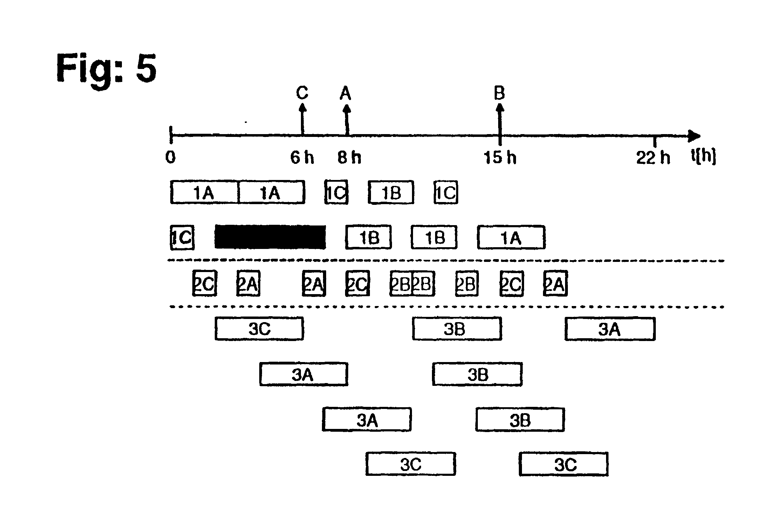

In Fig. 5 ist eine Produktionssteuerung dargestellt, die von einem Produktionsplan gemäß Fig. 3 ausgeht, wobei jedoch eine der beiden Teilanlagen (1.1, 1.2) der Stufe 1 ausfällt. Die Vorgabe der möglichst frühen Verfügbarkeit der Produkte A, B, C bleibt jedoch unverändert. Aufgrund der Störung ergibt sich eine früheste Verfügbarkeit einer Charge des Produkts B nach 15 Stunden, wobei in den Stufen 2 und 3 eine Veränderung des Produktionsplans erfolgt ist.

In der Stufe 1 wird sowohl auf den Teilanlagen 1.1 als auch auf der Teilanlage 1.2 der ursprüngliche Produktionsplan eingehalten, lediglich in den Stufen 2 und 3 erfolgte eine Veränderung. Dies entspricht dem Stand der Technik.

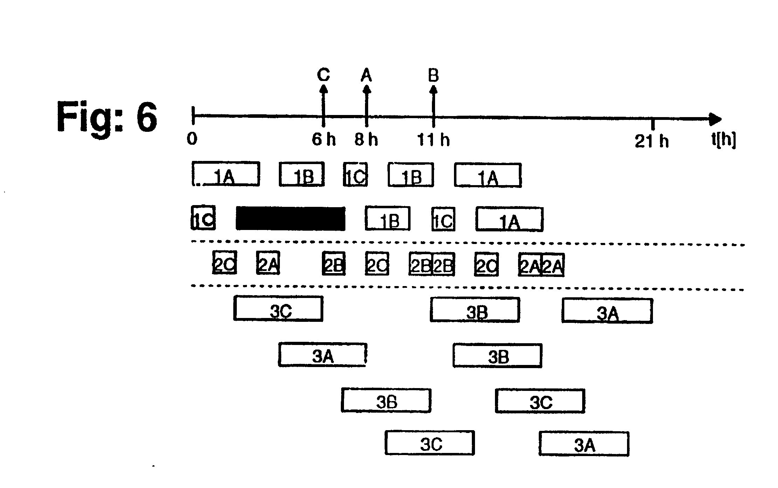

In Fig. 6 erfolgt die Neuberechnung des Produktionsplans gemäß der Erfindung nach vorgegebenen Regeln für alle Stufen und wird ausgelöst durch ein Signal, welches aus dem Bereich der Stufe 1 kommt und die Störung meldet. Dieses Signal kann insbesondere eine Abweichung von der vorgegebenen Temperatur, der Viskosität, des Drucks, der Konzentration, des Füllstandes oder des Durchflusses sein. Neben diesem als Störsignal auftretenden, unerwarteten Signal können auch erwartete Signale eintreten, die beispielsweise das Ende eines Prozeßabschnitts signalisieren. In dem Ausführungsbeispiel führt die Neuberechnung des Produktionsplans durch die Neuberechnung der Stufe 1 zu einer Abkürzung der schnellstmöglichen Verfügbarkeit jeweils einer Charge A, B, C bereits nach 11 Stunden.

Ohne Störung (Fig. 3) kann nach 10 Stunden jeweils eine Charge A, B, C verfügbar sein, bei Auftreten einer Störung mit Veränderung des Produktionsplans gemäß dem Stand der Technik (Fig. 5) verschiebt sich dieser Zeitpunkt auf 15 Stunden, mit erfindungsgemäßer Neuberechnung des Produktionsplans (Fig. 6) kann diese Zeit auf 11 Stunden verkürzt werden.

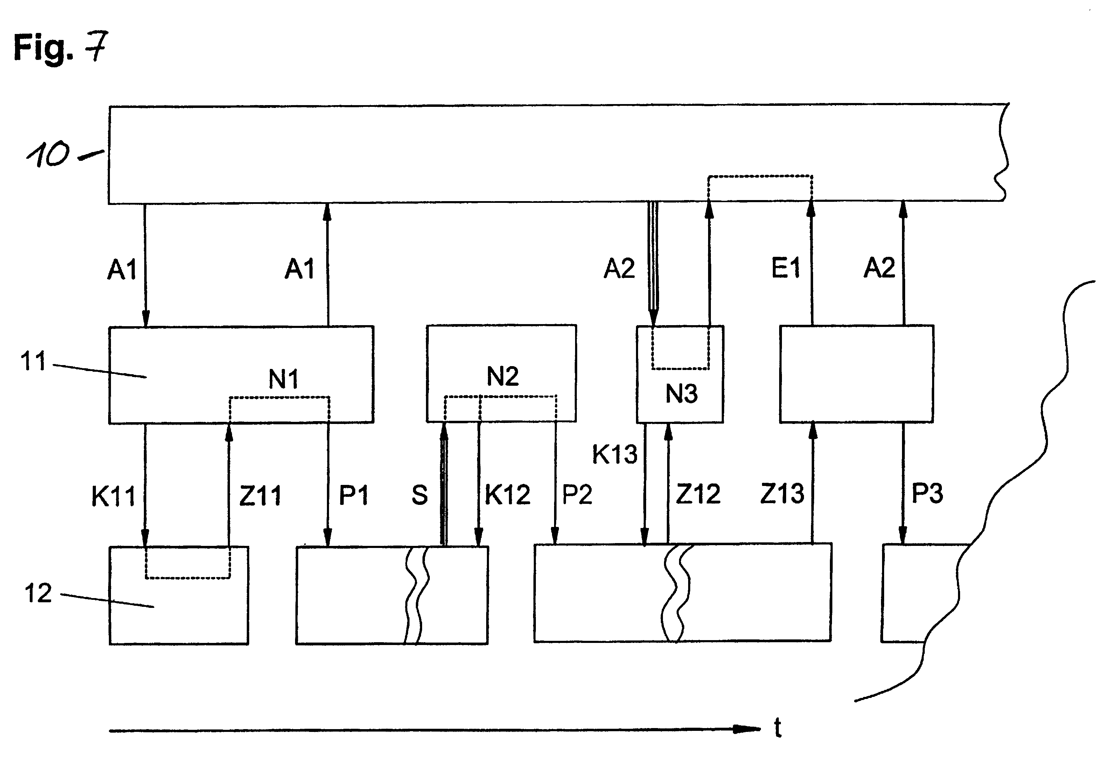

In Fig. 7 ist ein logischer Ablaufplan in verschiedenenen Ausführungsebenen über der Zeit dargestellt. Die Kommandoebene 10 gibt einen Auftrag A1 an eine Steuereinheit 11, welche eine Kontrollmessung K11 des Zustands Z11 der Ausführungsorgane 12 vornimmt. In Abhängigkeit der Zustandsgröße Z11 und vorgebener Zeitspannen für einzelne Verfahrensschritte wird in der Steuerungseinheit 11 eine Neuberechnung N1 des Produktionsplans vorgenommen. Der aus der Neuberechnung N1 resultierende Produktionsplan P1 dient zur Steuerung der Ausführungsorgane 12.

Tritt bei dem Ausführungsorgan 12 ein Störsignal S auf, wird es von der Steuereinheit 11 erfaßt, und es erfolgt beispielsweise eine Notabschaltung einer Teilanlage oder einer Stufe, bezeichnet als K12. Weiterhin wird eine Neuberechnung N2 des Produktionsplans P1 durchgeführt, welche unter Umständen zu einem geänderten Produktionsplan P2 führt. Nach diesem Produktionsplan P2 werden die Ausführungsorgane 12 als Folge des Störsignals S weiterbetrieben.

Neben prozeß- oder anlagebedingten Signalen kann auch eine Auftragsänderung von der Kommandoebene 10 aus erfolgen, beispielsweise aufgrund einer veränderten Aufgabenstellung. Diese veränderte Aufgabenstelllung A2 wird der Steuereinheit 11 mitgeteilt und führt zur Neuberechnung N3 des Produktionsplans P3. Der Produktionsplan P3 wird jedoch nicht zwangsläufig sofort umgesetzt, weil beispielsweise die Kontrolle K13 einen Zustand Z12 ergibt, der signalisiert, daß der Prozeß noch nicht abgeschlossen ist bzw. sich in einer Phase befindet, in der er nicht abgebrochen werden kann. Sobald ein Zustand Z13 an die Steuereinheit 11 gemeldet wird, der den Abschluß des Prozesses in den Ausführungsorganen 12 anzeigt, wird das Ende E1 an die Kommandoebene signalisiert und der neue Produktionsplan P3 zur Ausführung gebracht. Dies wird der Kommandoebene 10 angezeigt.

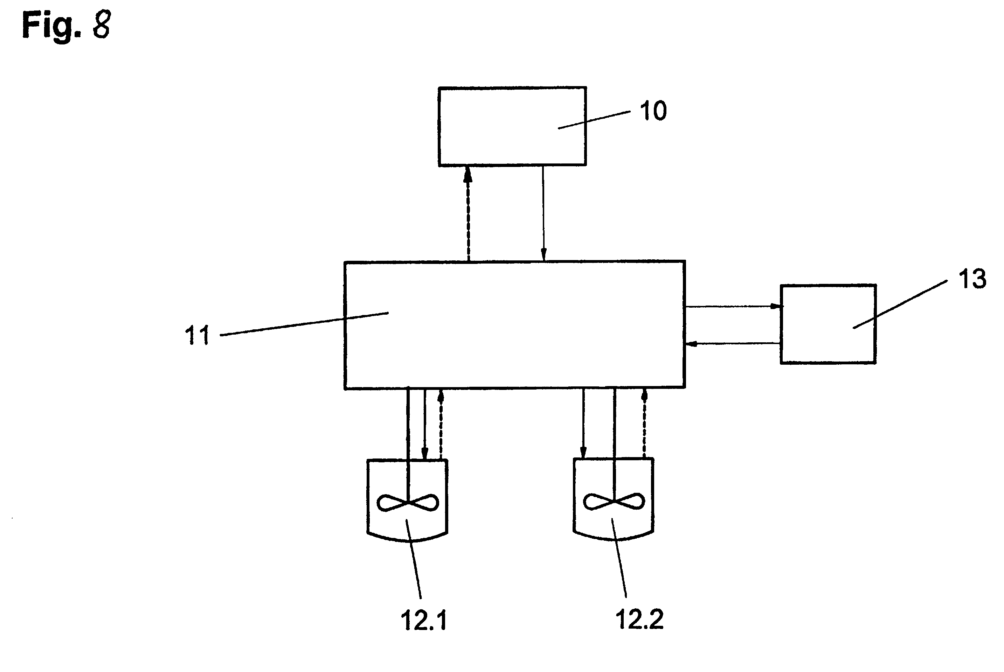

In Fig. 8 ist ein Aufbau als Prinzipskizze dargestellt. Zwei Rührkessel 12.1, 12.2 als Beispiele für Teilanlagen einer gemeinsamen oder zweier verschiedener Stufen werden über die Steuereinheit 11 betrieben. Dabei erhalten die Rührkessel 12.1, 12.2 Steuerbefehle (durchgezogener Pfeil) und geben ihrerseits Kontrollsignale (gestrichelter Pfeil) an die Steuereinheit 11 zurück. Der Betrieb der Rührkessel 12.1, 12.2 erfolgt nach in der Steuereinheit 11 unter Zuhilfenahme von in einem Speicher 13 enthaltenen Regeln bzw. Erfahrungswerten in Form eines Entscheidungsbaums. Weiterhin ist die Steuereinheit 11 mit einer Kommandoeinheit 10 verbunden, die für die Steuereinheit 11 Zielvorgaben vorgibt.

Anhand der Zielvorgaben, der Ist-Zustände der Rührkessel 12.1, 12.2 und der Erfahrungsgundsätze (Regeln) in dem gespeicherten Entscheidungsbaum legt die Steuereinheit 11 das Produktionsprogramm fest und betreibt die Rührkessel 12.1, 12.2.

## Patentansprüche

1. Verfahren zur Produktionssteuerung von diskretisierbaren, nach einem Produktionsplan ablaufenden chemischen Prozessen zur Herstellung mehrerer Produkte (A, B, C) in mehreren Stufen (1, 2, 3), **dadurch gekennzeichnet, daß** ein auf einen Betriebsparameter zumindest einer der Stufen (1, 2, 3) bezogener Meßwert erfaßt und überwacht wird, daß bei Überschreitung eines Grenzwerts des Meßwerts ein Signal ausgelöst wird, daß aufgrund des Signals eine Neuberechnung des Produktionsplans erfolgt und daß in den Stufen (1, 2 3) eine Durchführung der Prozesse entsprechend des neuen Produktionsplans stattfindet.

2. Verfahren nach Anspruch 1, **dadurch gekennzeichnet, daß** in den Stufen (1, 2, 3) eine oder mehrere Teilanlagen (1.1 - 1.2; 2.1, 3.1 - 3.4) vorhanden sind, und daß nach Neuberechnung des Produktionsplans die Belegung der Teilanlagen automatisch entsprechend dem neuberechneten Produktionsplan erfolgt.

3. Verfahren nach Anspruch 1 oder 2, **dadurch gekennzeichnet, daß** zur Berechnung des Produktionsplans fest vorgegebene Zeiten für einzelne Verfahrensschritte aus einem Speicher (13) ausgelesen werden und daß bei Auftreten des Signals eine Neuberechnung des Produktionsplans mit diesen fest vorgegebenen Zeiten erfolgt.

4. Verfahren nach Anspruch 1 oder 2, **dadurch gekennzeichnet, daß** die dem Produktionsplan zugrundeliegenden Zeiten ausgehend von einem Startwert anhand von realen, verfahrensspezifischen Abläufen nach Auftreten des Signals verändert werden und daß anschließend mit den geänderten Zeiten eine Neuberechnung des Produktionsplans erfolgt.

5. Verfahren nach einem der Ansprüche 1 bis 4, **dadurch gekennzeichnet, daß** die Neuberechnung des Produktionsplans unter Berücksichtigung von Regeln erfolgt, die aus einem Speicher (13) ausgelesen werden.

6. Verfahren nach Anspruch 5, **dadurch gekennzeichnet, daß** während der Berechnung des Produktionsplans schrittweise Maßnahmen festgelegt werden, daß die Regeln auf Vereinbarkeit mit der jeweils vorgeschlagenen Maßnahme überprüft werden, wobei im Fall der Nichtvereinbarkeit eine Neuberechnung dieses Schrittes des Produktionsplans unter Berücksichtigung dieser Regeln erfolgt.

7. Verfahren nach einem der Ansprüche 5 oder 6, **dadurch gekennzeichnet, daß** die Regeln vor der Berechnung des Produktionsplans in Form eines Entscheidungsbaums abgespeichert werden.

**8.** Verfahren nach einem der Ansprüche 5 bis 7, **dadurch gekennzeichnet, daß** die gespeicherten Regeln bei Auftreten des Signals auf eine Handlungsanweisung hin überprüft werden, daß die aufgefundenen Handlungsanweisungen den bei Auftreten des Signals vorhandenen Ist-Zustand in einen korrigierten Ist-Zustand überführen und daß der Produktionsplan ausgehend von dem neuen Ist-Zustand neu berechnet wird.

**9.** Verfahren nach einem der Ansprüche 1 bis 8, **dadurch gekennzeichnet, daß** das Signal ein Alarmsignal für einen gestörten Prozeßverlauf darstellt.

**10.** Verfahren nach einem der Ansprüche 1 bis 8, **dadurch gekennzeichnet, daß** innerhalb mindestens einer Stufe mehrere Teilanlagen (1.1 - 1.2, 3.1 - 3.4) vorhanden sind und daß bei Auftreten des Signals eine Neubestimmung des Produktionswegs innerhalb der Stufe erfolgt.

**11.** Verfahren nach einem der Ansprüche 1 bis 10, **dadurch gekennzeichnet, daß** als Betriebsparameter die Temperatur, die Viskosität, der Druck, die Konzentration, der Füllstand oder der Durchfluß verwendet wird.

**12.** Verfahren nach einem der Ansprüche 1 bis 10, **dadurch gekennzeichnet, daß** diskontinuierliche Prozesse gesteuert werden.


**Claims**

**1.** A method for production control of discretizable chemical processes which run according to a production plan and are used to produce a plurality of products (A, B, C) in a plurality of stages (1, 2, 3), wherein a measured value which is based on an operating parameter of at least one of the stages (1, 2, 3) is recorded and monitored, wherein a signal is generated in the event of a limit value for the measured value being exceeded, wherein the production plan is recalculated on the basis of the signal, and wherein the processes are carried out on the basis of the new production plan in the stages (1, 2, 3).

**2.** The method as claimed in claim 1, wherein one or more subunits (1.1 - 1.2; 2.1, 3.1 - 3.4) are present in the stages (1, 2, 3), and wherein, after the production plan has been recalculated, the subunits are loaded automatically according to the recalculated production plan.

**3.** The method as claimed in claim 1 or 2, wherein fixedly predetermined times for individual method steps are read out of a memory (13) in order for the production plan to be calculated, and wherein, in the event of the signal being generated, the production plan is recalculated using these fixedly predetermined times.

**4.** The method as claimed in claim 1 or 2, wherein the times on which the production plan is based are changed, starting from an initial value, on the basis of real, method-specific sequences after the signal has been generated, and wherein the changed times are then used to recalculate the production plan.

**5.** The method as claimed in one of claims 1 to 4, wherein the production plan is recalculated taking into account rules which are read from a memory (13).

**6.** The method as claimed in claim 5, wherein measures are established stepwise during the calculation of the production plan, and wherein the rules are checked for compatibility with the proposed measure, this step of the production plan being recalculated taking these rules into account in the event of this compatibility not being found.

**7.** The method as claimed in one of claims 5 or 6, wherein the rules are stored in the form of a decision tree before the production plan is calculated.

**8.** The method as claimed in one of claims 5 to 7, wherein the stored rules are checked for an action instruction in the event of the signal being generated, wherein the action instructions found convert the actual state which exists when the signal is generated into a corrected actual state, and wherein the production plan is recalculated starting from the new actual state.

**9.** The method as claimed in one of claims 1 to 8, wherein the signal represents an alarm signal for a disrupted process sequence.

**10.** The method as claimed in one of claims 1 to 8, wherein there are a plurality of subunits (1.1 - 1.2, 3.1 - 3.4) within at least one stage, and wherein the production path within the stage is redetermined in the event of the signal being generated.

**11.** The method as claimed in one of claims 1 to 10, wherein the operating parameter used is the temperature, the viscosity, the pressure, the concentration, the fill level or the flow rate.

**12.** The method as claimed in one of claims 1 to 10, wherein batch processes are controlled.

## Revendications

1. Procédé de pilotage de la production de processus chimiques séparables, selon un plan de production, pour la préparation de plusieurs produits (A, B, C) en plusieurs étapes (1, 2, 3), **caractérisé en ce que** l'on saisit et supervise une valeur de mesure qui est attribuée à un paramètre de service appartenant à au moins une des étapes (1, 2, 3), et **caractérisé en ce que**, lorsqu'une valeur limite de la valeur de mesure est dépassée, un signal est déclenché, et **caractérisé en ce que**, suite à ce signal, le plan de production est recalculé, et **caractérisé en ce que** les processus sont alors réalisés dans les étapes (1, 2, 3) suivant le nouveau plan de production.

2. Procédé selon la revendication 1, **caractérisé en ce que** les étapes (1, 2, 3) présentent une ou plusieurs sections de l'installation (1.1 à 1.2; 2.1, 3.1 à 3.4), et **en ce que**, à la suite du nouveau calcul du plan de production, l'emploi des sections de l'installation est réalisé de manière automatique suivant le plan de production recalculé.

3. Procédé selon la revendication 1 ou 2, **caractérisé en ce que** l'on extrait d'une mémoire (13) des durées explicitement prédéfinies concernant les différentes étapes de procédé, afin de procéder au calcul du plan de production, et **caractérisé en ce que**, lorsque le signal apparaît, un nouveau calcul du plan de production est effectué en employant ces durées explicitement prédéfinies.

4. Procédé selon la revendication 1 ou 2, **caractérisé en ce que** l'on change, ultérieurement à l'apparition du signal, les durées qui sont à la base du plan de production, en partant d'une valeur initiale, en s'appuyant sur les processus réels et spécifiques du procédé, et **caractérisé en ce que** l'on réalise ensuite un nouveau calcul du plan de production en employant les durées que l'on a changées.

5. Procédé selon l'une quelconque des revendications 1 à 4, **caractérisé en ce que** l'on procède au nouveau calcul du plan de production en tenant compte des règles que l'on a extrait de la mémoire (13).

6. Procédé selon la revendication 5, **caractérisé en ce que** l'on détermine progressivement des mesures pendant le calcul du plan de production, et **en ce que** l'on vérifie la compatibilité de chaque mesure proposée avec les règles, où, dans le cas d'une incompatibilité, on procède à un nouveau calcul de l'étape en question du plan de production, tout en tenant compte de ces règles.

7. Procédé selon l'une quelconque des revendications 5 ou 6, **caractérisé en ce que** l'on conserve en mémoire les règles, sous forme d'un arbre de décision, avant de réaliser le calcul du plan de production.

8. Procédé selon l'une quelconque des revendications 5 à 7, **caractérisé en ce que**, lors de l'apparition du signal, on recherche l'instruction dans les règles enregistrées, **caractérisé en ce que** les instructions trouvées changent l'état effectif présent lors de l'apparition du signal en un état effectif corrigé, et **caractérisé en ce que** l'on réalise un nouveau calcul du plan de production à partir du nouvel état effectif.

9. Procédé selon l'une quelconque des revendications 1 à 8, **caractérisé en ce que** le signal est un signal d'alarme signalant le dérèglement du déroulement du procédé.

10. Procédé selon l'une quelconque des revendications 1 à 8, **caractérisé en ce qu'**au moins une étape présente plusieurs sections de l'installation (1.1 à 1.2; 2.1, 3.1 à 3.4), et **en ce que** l'on procède à une nouvelle détermination de la voie de production à l'intérieur de l'étape lors que le signal apparaît.

11. Procédé selon l'une quelconque des revendications 1 à 10, **caractérisé en ce que** l'on emploie en tant que paramètre de service la température, la viscosité, la pression, la concentration, le niveau ou le débit.

12. Procédé selon l'une quelconque des revendications 1 à 10, **caractérisé en ce que** l'on pilote des processus discontinus.

**Fig: 1**

**Fig: 2**

**Fig: 3**

**Fig: 4**

Fig: 5

Fig: 6

C    A    B

0    6 h   8 h   11 h     21 h   t[h]

EP 0 987 613 B1

**Fig. 7**

EP 0 987 613 B1

**Fig.** *8*

EP 0 987 613 B1